# EUROPÄISCHE PATENTANMELDUNG

(11) **EP 0 978 448 A2**
(43) Veröffentlichungstag der Anmeldung: **09.02.2000**
(21) Anmeldenummer: 99114835.4
(22) Anmeldetag: 29.07.1999
(51) Int. Cl.: B63B 19/18, F16C 19/50

(54) **Auflager für Lukendeckel**

(30) Priorität: 01.08.1998 DE 19834856
(71) Anmelder: German Lashing Robert Böck GmbH, 28195 Bremen (DE)
(72) Erfinder: Fina, Dieter, 22149 Hamburg (DE); Cohrs, Jonny, 21149 Hamburg (DE)

(57) **Zusammenfassung**

Ein Auflager für Lukendeckel an Bord von Schiffen hat einen am Deck befestigbaren unteren Lagerteil (2) und einen dem Lukendeckel zugeordneten oberen Lagerteil (5). Die beiden Lagerteile (2,3) sind relativ zueinander im wesentlichen horizontal beweglich und zwischen ihnen ist eine Mehrzahl von gegeneinander auf Abstand gehaltenen Kugeln (4) angeordnet.

## Beschreibung

Die Erfindung betrifft einen Auflager für Lukendeckel an Bord von Schiffen, mit einem am Deck (Süll) befestigbaren unteren Lagerteil und einem dem Lukendeckel zugeordneten oberen Lagerteil, welches gegenüber dem unteren Lagerteil im wesentlichen horizontal beweglich ist.

Derartige Auflager dienen der Kraftübertragung vom Lukendeckel auf das Schiffsdeck, d.h. der Abtragung der Last, welche einerseits vom Gewicht des Lukendeckels selbst herrührt, andererseits von der Auflast, die zumeist von auf dem Lukendeckel gestapelten Containern herrührt. Sie bestehen herkömmlich aus einer Mehrzahl diskreter Gleitlager, welche entlang dem Rand der Luke, also dem Süll angeordnet sind: Ein unterer Lagerklotz ist am Süll, ein oberer am Lukendeckel befestigt. Im geschlossenen Zustand der Luke liegen die einander zugeordneten Klötze aufeinander und bilden zwischen sich die Gleitfläche, in deren Ebene eine Horizontalbewegung des Lukendeckels gegenüber dem Süll möglich ist.

Die Notwendigkeit zu solchen Horizontalbewegungen ergibt sich aus mehreren Gründen; beispielsweise kommt es während der Fahrt des Schiffes infolge des Seeganges zu Verwindungen des Schiffskörpers, welche die Luken- und damit die Süllgeometrie verändern, so daß die Lukendeckel überlastet werden würden, falls sie starr mit dem Süll verbunden wären, die Auflager machen eine Relativbewegung des Sülls zum Lukendeckel möglich. Eine andere Ursache für horizontale Relativbewegungen innerhalb der Auflager sind die Verformungen, denen der Lukendeckel unter seiner Auflast ausgesetzt ist, und die sich ebenfalls unter dem Einfluß des Seeganges dynamisch verändern können.

Ein großes Problem für die bekannten Lukendeckel-Auflager stellt die erhebliche Größe der Kräfte dar, welche über die Auflager übertragen werden müssen. Hinzu kommt, daß sich die Flächenpressung der bekannten Gleitlager exorbitant vergrößert, wenn die Gleitflächen der Lagerpartner nicht in derselben Ebene, also nicht vollflächig aufeinanderliegen, sondern sich keilförmig aufspreizen ("schnäbeln"). Nicht eben selten kommt es dann zum Kaltverschweißen, sogenantem "Fressen" in den hochbelasteten Lagerabschnitten, was wiederum über kurz oder lang zur Zerstörung der Lager sowie häufig auch des Sülls und/oder des Lukendeckels führt.

Obwohl zahlreiche Vorschläge für eine Verbesserung der Auflagersituation bei Lukendeckeln an Bord von Schiffen gemacht worden sind, hat sich keine - teils aus Kostengründen, teils im Hinblick auf die rauhen Ansprüche im Schiffsbetrieb - zufriedenstellend durchsetzen können.

Der Erfindung liegt die Aufgabe zugrunde, eine Lukendeckel-Auflager-Ausbildung anzugeben, welche bei vertretbaren Kosten eine wesentliche Verbesserung des Lagerverhaltens und der Lebensdauer mit sich bringt.

Die erfindungsgemäße Lösung dieser Aufgabe besteht bei einem Auflager der eingangs geschilderten Art darin, daß zwischen dem unteren Lagerteil und dem oberen Lagerteil eine Mehrzahl von gegeneinander auf Abstand gehaltenen Kugeln angeordnet ist. Auf diese Weise wird die herkömmliche Gleitreibung zwischen den Lagerteilen durch eine in alle horizontalen Richtungen wirksame Rollreibung mit einem entsprechend wesentlich geringeren Reibungsbeiwert ersetzt. Ferner erlauben die auf Abstand gehaltenen Kugeln eine Bewegung der Lagerpartner (unteres Lagerteil und oberes Lagerteil) relativ zueinander in mehreren Richtungen: Es sind Längsbewegungen und Querbewegungen sowie gleichzeitig Längs- und Querbewegungen möglich und im Falle der üblichen Anordnung mehrerer erfindungsgemäßer Auflager zur Lagerung eines Lukendeckels können auch Torsionsbewegungen des gesamten Schiffsrumpfes und damit einhergehende Verwindungen des Lukendeckels kompensiert werden, während die Kugeln sicher auf Abstand zueinander gehalten werden und dadurch keine Reibung der Kugeln aneinander erfolgt.

In besonders bevorzugter Weise wird vorgeschlagen, daß die Kugeln mittels mindestens eines zwischen dem oberen und unteren Lagerteil angeordneten, mehrere jeweils einer Kugel zugeordnete Durchbrechungen aufweisenden Abstandshalteelements zueinander auf Abstand gehalten werden. Zweckmäßigerweise ist das Abstandshalteelement als ein mehrere kreisförmige Durchgangsbohrungen aufweisendes, flaches Element ausgebildet und ragen die Kugeln teilweise durch die Durchgangsbohrungen hindurch, so daß auf konstruktiv einfache Weise die Kugeln zueinander auf Abstand gehalten werden. Diese Ausführungsform wird dadurch weitergebildet, zwei parallel zueinander angeordnete Abstandshaltebleche mit jeweils fluchtend zueinander angeordneten Durchgangsbohrungen die Kugeln auf Abstand halten, und daß die beiden Abstandshaltebleche durch Querstreben miteinander verbunden sind. Dadurch ergibt sich ein kompaktes Kugellagermodul, welches einfach vormontierbar und vor Ort zur Montage des Lagers montierbar ist.

In ebenfalls bevorzugter Weise wird vorgeschlagen, daß das obere Lagerteil und das untere Lagerteil jeweils eine den Kugeln zugewandte, im wesentlichen ebene Kontaktfläche aufweisen. Auf diese Weise ergibt sich eine einfache Herstellung der Lagerteile. Es können, wie Versuche gezeigt haben, erhebliche Kräfte aufgenommen werden und der Verschleiß ist gering.

In alternativer Weise sind die Kugeln in Kugelpfannen gehalten, welche im unteren Lagerteil angeordnet sind. Diese Kugelpfannen können flach sein und einen etwas größeren Radius als die Kugeln haben. Zwar findet zwischen den Kugeln und den Kugelpfannen wiederum eine Gleitreibung statt, jedoch verteilt sich diese auf wesentlich größere Flächen als im Falle einer unmittelbaren Gleitreibung zwischen nicht ideal aufeinanderliegenden Lagerteilen eines Gleitlagers; überdies sind die Kugeln in den Kugelpfannen einfacher und besser schmierbar als herkömmliche Gleitlagerflächen. Auf der Oberseite der Kugeln liegt das obere Lagerteil auf und kann sich auf den sich entsprechend drehenden Kugeln relativ reibungsarm horizontal in alle Richtungen bewegen.

Aus der DE-OS 43 37 365 ist es an sich bekannt, zwischen den oberen und unteren Lagerteilen von Lukendeckel-Auflagern an Bord von Schiffen Kugeln anzuordnen, und zwar entweder in mehrlagiger Schüttung oder in einer einzigen Lage (Fig. 9a). Nicht nur liegen auch im letztgenannten Falle die Kugeln einander berührend eng nebeneinander, sondern sie bewegen sich in einer von gekrümmten Lagerflächen definierten gekrümmten Ebene und können deshalb zwar Schwenkbewegungen des oberen Lagerteils gegenüber dem unteren Lagerteil ausgleichen, wie sie bei statischer Durchbiegung eines Lukendeckels unter wechselnder Auflast auftreten, lassen aber Horizontalbewegungen der Lagerteile relativ zueinander nicht zu. Es sind jedoch letztere, welchen im Schiffsbetrieb Rechnung getragen werden muß, namentlich deshalb, weil nicht nur Seitenbewegungen infolge Verwindung des Schiffsrumpfes stattfinden, sondern vor allem auch Längsbewegungen infolge des "Rollen" des Schiffes bei Seegang; die dabei nahezu rhythmisch auftretenden Beschleunigungen und Verzögerungen des Schiffsrumpfes in seiner Längsrichtung führen infolge der Massenträgheit des Lukendeckels samt Auflast zu Längsbewegungen zwischen den oberen und unteren Lagerteilen.

Vorzugsweise ist erfindungsgemäß das untere Lagerteil mit den Kugeln von einem oben offenen kastenförmigen Gehäuse umschlossen, welches das obere Lagerteil, mit horizontalem Abstand zu den Seitenwänden auf den Kugeln aufliegend, mittels einem die Seitenwände mit geringem vertikalen Abstand übergreifendem, umlaufenden Rand deckelartig im wesentlichen abschließt. Eine solche Anordnung schirmt den eigentlichen Lagerbereich von Umwelteinflüssen, insbesondere überkommendem Wasser, weitgehend ab, erlaubt aber die erforderliche Relativbewegung des oberen Lagerteils gegenüber dem unteren Lagerteil. Das Gehäuse kann deshalb mit einem Schmiermittel, insbesondere einem hochviskosen Schmierfett gefüllt sein. Der obere Lagerteil ist in solchem Falle nicht Bestandteil des Lukendeckels, vielmehr wird dieser auf den oberen Lagerteil aufgelegt und dort durch sein Eigengewicht oder entsprechende Einweiser etc. horizontal fixiert.

Um zu gewährleisten, daß beim Aufsetzen des Lukendeckels im Ruhezustand des Schiffes der obere Lagerteil gegenüber dem unteren seine relative Mittelstellung einnimmt (damit er sich später im Betrieb in alle Horizontalrichtungen ausreichend bewegen kann), sind insbesondere zwischen den Seitenwänden des Gehäuses und dem oberen Lagerteil federnde Abstandshalter angeordnet, welche im Ruhezustand das obere Lagerteil in definiertem Abstand von allen Seitenwänden halten. Gemäß einer Weiterbildung sind die Abstandshalter als gummielastische Federelemente ausgebildet. Die Federelemente können die mit den Abstandshalteelementen auf Abstand gehaltenen Kugeln in einem definierten, vorzugsweise zentrierten Ort bringen, wenn das Lager entlastet ist, so daß es in eine Ausgangsposition gebracht wird und dann erneut mit einer Kraft beaufschlagt werden kann, indem ein Lukendeckel aufgelegt wird. In diesem Fall ist vorzugsweise vorgesehen, daß die gummielastischen Federelemente einerseits abdichtend an den Seitenwänden des Gehäuses und andererseits abdichtend an den Abstandshalteblechen anliegen.

Solche Abstandshalter können alternativ aus Blattfedern bestehen, die am oberen Lagerteil oder einer Seitenwand befestigt sind und sich schräg zum jeweils anderen Bauteil erstrecken. Sie können aber auch aus Federstiften bestehen, die in den Seitenwänden befestigt sind und mit einer druckfederbelasteten Kugel gegen das obere Lagerteil drücken.

Vorteilhaft ist es, die Lagerteile und die Kugeln aus Edelstahl zu fertigen, der mindestens die Güte A 67 hat.

Die Zeichnungen veranschaulichen die Erfindung an zwei Ausführungsbeispielen. Darin zeigt:
- Fig. 1: einen Teilschnitt durch ein einzelnes Lukendeckel-Auflager gemäß der Linie I-I in Fig. 2;
- Fig. 2: einen (vergrößerten) Teilschnitt gemäß der Linie II-II in Fig. 1;

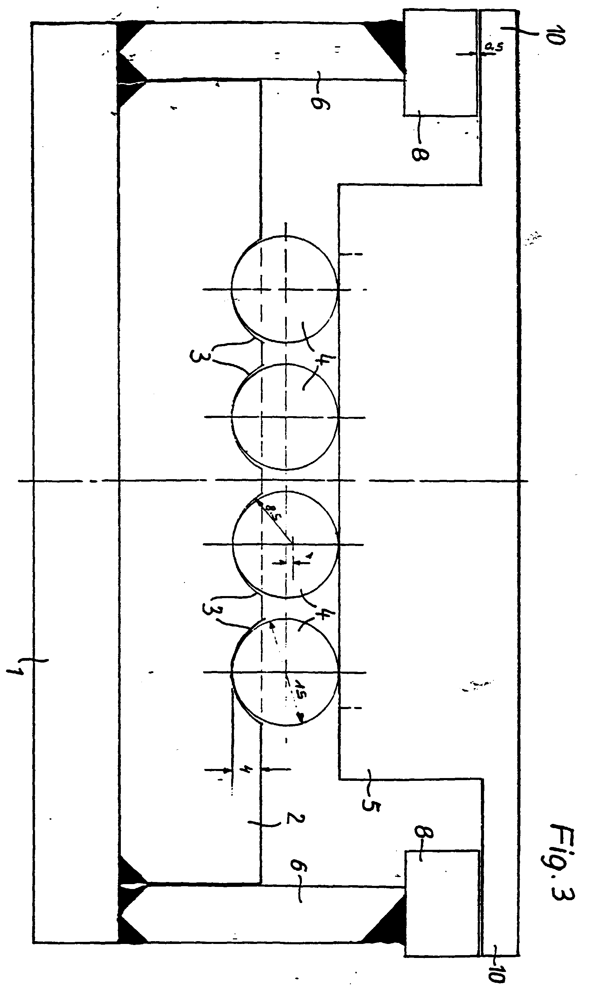

- Fig. 3: einen (ebenfalls vergrößerten) Schnitt gemäß der Linie III-III in Fig. 1;
- Fig. 4: ein alternatives Ausführungsbeispiel eines einzelnen Lukendeckel-Auflagers in einer teilweise geschnittenen Draufsicht;
- Fig. 5: eine Schnittdarstellung des Auflagers gemäß Fig. 4;
- Fig. 6: eine Seitenansicht des Auflagers gemäß Fig. 4; und
- Fig. 7: eine weitere Schnittdarstellung gemäß Schnittebene A-A aus Fig. 4.

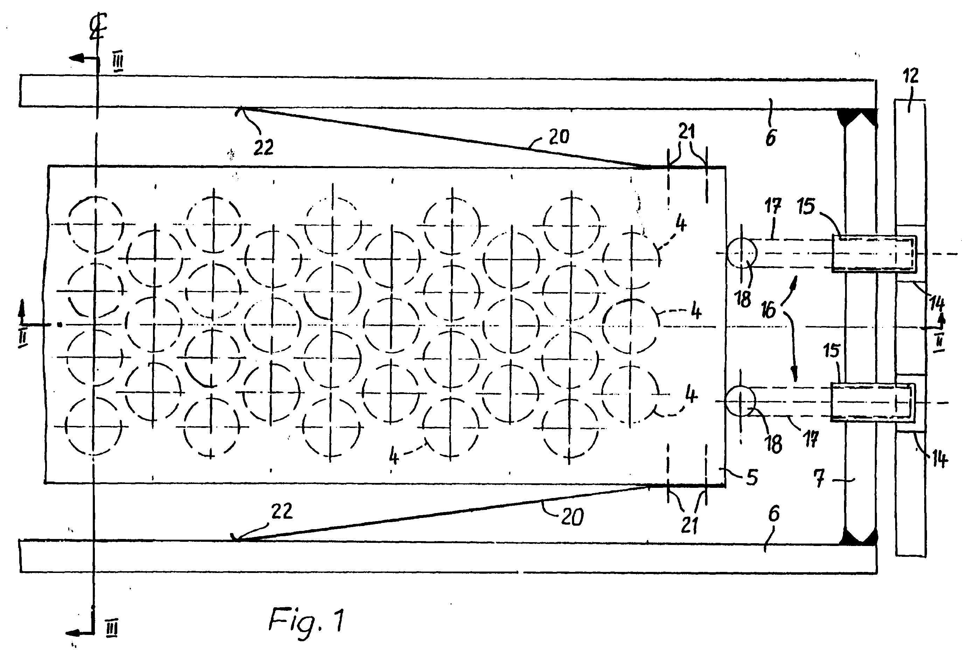

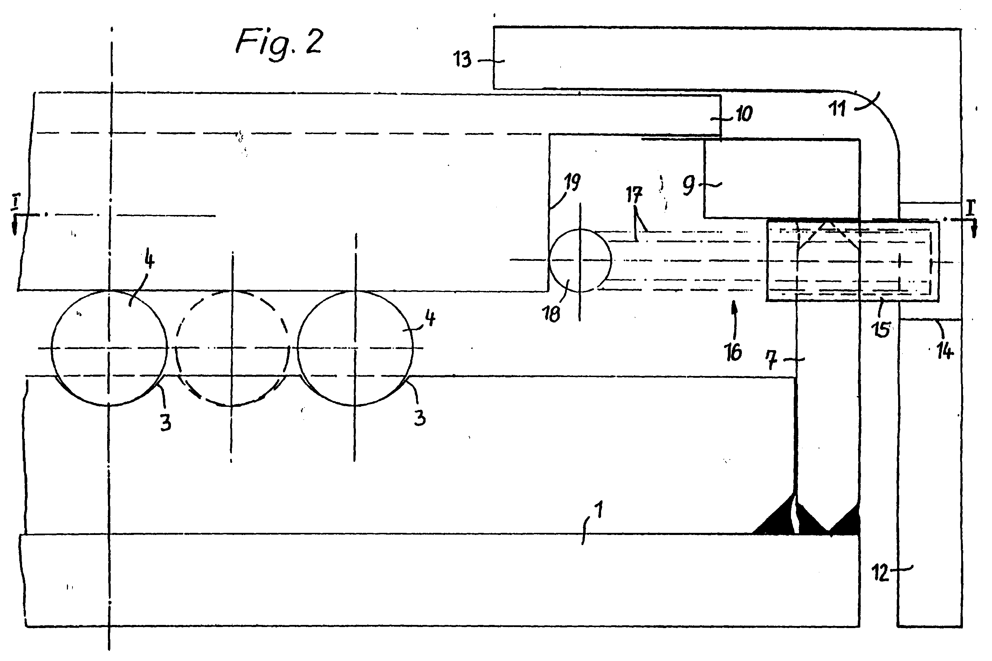

An einem zum Süll oder dem übrigen Deck gehörenden Basisteil 1 ist das untere Lagerteil 2 durch Anschweißen befestigt (Fig. 2). Auf seiner Oberseite sind - in der Anordnung gemäß Fig. 1 - Vertiefungen in Form von Kugelpfannen 3 vorgesehen, deren Radius etwas größer ist als derjenige von Kugeln 4, welche teilweise in den Kugelpfannen 3 aufgenommen sind. Oben auf den Kugeln 4 liegt das obere Lagerteil 5 auf, so daß sich die Kugeln 4 auf dessen Unterseite abwälzen können.

Seitlich des unteren Lagerteils 2 sind am Basisteil 1 sowohl in Längs- als auch in Querrichtung Seitenwände 6 bzw. 7 angeschweißt. Auf deren Oberseite sind Randstücke 8 bzw. 9 wiederum durch Anschweißen befestigt. Diesen von den Randstücken 8, 9 gebildeten Oberrand des im übrigen aus dem Basisteil 1 und den Seitenwänden 6, 7 gebildeten Gehäuses übergreift ein ebenfalls umlaufender Flansch 10 des oberen Lagerteils 5 mit geringem Abstand von beispielsweise 0,5 mm. Entlang den quer verlaufenden Seitenwänden 7 sind winkelförmige, mit ihren vertikalen Schenkeln 12 parallel zu diesen verlaufende Halterungen 11 angeordnet, welche mit ihren horizontal verlaufenden Schenkeln 13 das obere Lagerteil 5 mit seinem Flansch 10 - wiederum mit geringem Abstand von etwa 0,5 mm - übergreift und auf diese Weise ein Abheben des oberen Lagerteils 5 von den Kugeln 4 verhindert.

Durch seitliche Bohrungen 14 in den Halteteilen 11 sind in die Seitenwände 7 die Gehäuse 15 von Federstiften 16 eingesetzt, welche mit ihrer Druckfeder 17 auf Kugeln 18 drücken, die ihrerseits an den Seitenwänden 19 des oberen Lagerteils 5 anliegen und dieses - in der Längsrichtung des Lagers - durch ihre gegeneinander gerichtete Wirkung zur Mine hin ausrichten. Die entsprechende Querausrichtung erfolgt gemäß Fig. 1 mittels Blattfedern 20, welche am oberen Lagerteil 5 bei 21 angeschraubt sind und (längsbeweglich) mit ihren freien Enden bei 22 an der Innenseite der Seitenwände 6 anliegen.

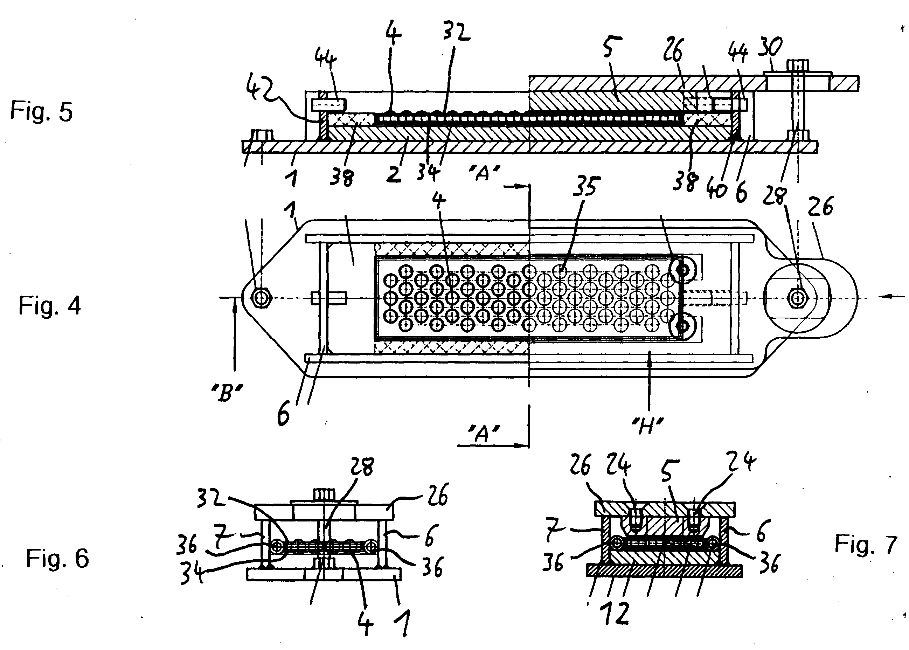

Das anhand der Fig. 4 bis 7 dargestellte alternative Ausführungsbeispiel eines Lukendeckel-Auflagers weist ebenfalls ein zum Süll gehörenden oder an diesem befestigtes Basisteil 1 auf, an dem zwei zueinander beabstandete Seitenwände 6, 7 angeschweißt sind und eine Art Gehäuse bilden. Das auf dem Basisteil 1 aufliegende und zwischen den Seitenwänden 6, 7 angeordnete untere Lagerteil 2 weist eine vorzugsweise gehärtete und im wesentlichen ebene Kontaktfläche auf, auf welcher die mehreren auf Abstand zueinander gehaltenen Kugeln 4 aufliegen und abrollen können. Das obere Lagerteil 5 weist eine untere, im wesentlichen ebene Kontaktfläche auf, die mit den Kugeln 4 in Berührung steht und auf welcher die Kugeln 4 abrollen können.

Das obere Lagerteil 5 ist mittels mehrerer in Fig. 7 dargestellter Schrauben 24 mit einer Auflageplatte 26 verschraubt, auf welche ein zu lagernder Lukendeckel auflegbar ist und durch die die Kräfte auf das obere Lagerteil 5 übertragen werden.

Die Auflageplatte 26 und das Basisteil 1 sind mittels eines Bolzens 28 und einer Unterlegscheibe 30 bewegbar miteinander verbunden.

Die mehreren Kugeln 4 sind mittels zweier Abstandshalteelemente in Form von Abstandshalteblechen 32, 34 zueinander auf Abstand gehalten. Die Abstandshaltebleche 32, 34 weisen kreisförmige Durchgangsbohrungen 35 auf, durch welche die Kugeln 4 teilweise hindurchragen und die, wie Fig. 4 veranschaulicht, in versetzt zueinander angeordneten Reihen an den Abstandshalteblechen 32, 34 ausgebildet sind, so daß eine dichte Kugelpackung entsteht. Die Abstandshaltebleche 32, 34 sind durch seitliche Stege oder Bleche miteinander verbunden und relativ zueinander auf Abstand gehalten. Die Kugeln 4 sind auf diese Weise sicher so zwischen den Abstandshalteblechen 32, 34 gehalten, daß sie nicht herausfallen können; auf diese Weise ist eine Art Lagermodul gebildet.

Benachbart zu den Kugeln 4 und den Abstandshalteblechen 32, 34 sind gummielastische Federelemente 36, 38 angeordnet, die sich an den Seitenwänden 6, 7 bzw. Seitenwänden 40, 42 abstützen. Die gummielastischen Federelemente 36, 38 sorgen einerseits dafür, daß die Kugeln 4 und die Abstandshaltebleche 32, 34 im unbelasteten Zustand im wesentlichen innerhalb des durch die Seitenwände 6, 7, 40, 42 begrenzten Gehäuses zentriert werden und gleichzeitig seitlich abgedichtet werden. Die Federelemente 36 weisen einen kreisförmigen Querschnitt auf (Fig. 6 und 7).

Das obere Lagerteil 5 wird durch federnde Abstandshalter im lastlosen Zustand zentriert bzw. in eine gewünschte Ausgangsposition verschoben. Die federnden Abstandshalter weisen zwei an den Seitenwänden 40, 42 befestigte Federelemente 44, etwa Spiralfedern auf.

## Patentansprüche

1. Auflager für Lukendeckel an Bord von Schiffen, mit einem am Deck (Süll) befestigbaren unteren Lagerteil und einem dem Lukendeckel zugeordneten oberen Lagerteil, welches gegenüber dem unteren Lagerteil im wesentlichen horizontal beweglich ist,
**dadurch gekennzeichnet**, daß zwischen dem unteren Lagerteil (2) und dem oberen Lagerteil (5) eine Mehrzahl von gegeneinander auf Abstand gehaltenen Kugeln (4) angeordnet ist.

2. Auflager nach Anspruch 1,
**dadurch gekennzeichnet**, daß die Kugeln (4) mittels mindestens eines zwischen dem oberen und unteren Lagerteil (5, 2) angeordneten, mehrere jeweils einer Kugel zugeordnete Durchbrechungen aufweisenden Abstandshalteelements zueinander auf Abstand gehalten werden.

3. Auflager nach Anspruch 2,
**dadurch gekennzeichnet**, daß das Abstandshalteelement alsein mehrere kreisförmige Durchgangsbohrungen aufweisendes, flaches Element ausgebildet ist und die Kugeln teilweise durch die Durchgangsbohrungen hindurchragen.

4. Auflager nach Anspruch 3,
**dadurch gekennzeichnet,** daß zwei parallel zueinander angeordnete Abstandshaltebleche mitjeweils fluchtend zueinander angeordneten Durchgangsbohrungen die Kugeln (4) auf Abstand halten, und daß die beiden Abstandshaltebleche durch Querstreben miteinander verbunden sind.

5. Auflager nach Anspruch einem der vorstehenden Ansprüche,
**dadurch gekennzeichnet,** daß das obere Lagerteil (5) und das untere Lagerteil (2) jeweils eine den Kugeln (4) zugewandte, im wesentlichen ebene Kontaktfläche aufweisen.

6. Auflager nach Anspruch 1,
**dadurch gekennzeichnet**, daß die Kugeln (4) in Kugelpfannen (3) gehalten sind, welche im unteren Lagerteil (2) angeordnet sind.

7. Auflager nach Anspruch 6,
**dadurch gekennzeichnet,** daß die Kugelpfannen (3) flach sind und einen etwas größeren Radius als die Kugeln (4) haben.

8. Auflager nach einem der vorhergehenden Ansprüche,
**dadurch gekennzeichnet,** daß das untere Lagerteil (2) mit den Kugeln (4) von einem oben offenen kastenförmigen Gehäuse (Seitenwände 6, 7) umschlossen ist.

9. Auflager nach Anspruch 8,
**dadurch gekennzeichnet,** daß das Gehäuse das obere Lagerteil (5), mit horizontalem Abstand zu den Seitenwänden (6, 7) auf den Kugeln (4) aufliegend, mittels einem die Seitenwände (6, 7) mit geringem vertikalen Abstand übergreifen, umlaufenden Rand (Schenkel 13 des Halteteils 11) im wesentlichen abschließt.

10. Auflager nach Anspruch 8 oder 9,
**dadurch gekennzeichnet**, daß das Gehäuse mit hochviskosem Schmierfett gefüllt ist.

11. Auflager nach Anspruch 8, 9 oder 10,
**dadurch gekennzeichnet**, daßzwischen den Seitenwänden (6, 7) des Gehäuses und dem oberen Lagerteil (5) federnde Abstandshalter (16, 20) angeordnet sind, welche im Ruhzustand das obere Lagerteil (5) in definiertem Abstand von allen Seitenwänden (6, 7) halten.

12. Auflager nach Anspruch 11,
**dadurch gekennzeichnet,** daß die Abstandshalter als gummielastische Federelemente ausgebildet sind.

13. Auflager nach Anspruch 4, 8 und 12,
**dadurch gekennzeichnet,** daß die gummielastischen Federelemente einerseits abdichtend an den Seitenwänden (6, 7) des Gehäuses und andererseits abdichtend an den Abstandshalteblechen anliegen.

14. Auflager nach Anspruch 11,
**dadurch gekennzeichnet,** daß die Abstandshalter aus Blattfedern (20) bestehen, die am oberen Lagerteil (5) oder einer Seitenwand (6) befestigt sind und sich schräg zum jeweils anderen Bauteil erstrecken.

15. Auflager nach Anspruch 11,
**dadurch gekennzeichnet**, daß die Abstandshalter aus Federstiften (16) bestehen, die in den Seitenwänden (7) befestigt sind und mit einer druckfederbelasteten Kugel (18) gegen das obere Lagerteil (5) drücken.

16. Auflager nach einem der vorhergehenden Ansprüche,
**dadurch gekennzeichnet**, daß die Lagerteile (2, 5) und die Kugeln (4) aus Edelstahl mindestens der Güte A 67 bestehen.
